# EUROPÄISCHE PATENTSCHRIFT

(11) **EP 1 396 644 B1**
(45) Veröffentlichungstag und Bekanntmachung des Hinweises auf die Patenterteilung: **11.05.2005**
(21) Anmeldenummer: 03103254.3
(22) Anmeldetag: 30.08.2003
(51) Int. Cl.: F16B 7/18, F16B 3/06

(54) **Vorrichtung zum Verbinden von Montageschienen**
Device for connecting assembly rails
Dispositif pour relier des rails d'assemblage

(30) Priorität: 05.09.2002 DE 10240998
(43) Veröffentlichungstag der Anmeldung: 10.03.2004
(73) Patentinhaber: HILTI Aktiengesellschaft, 9494 Schaan (LI)
(72) Erfinder: Hoffmann, Armin, 86899, Landsberg (DE); Herb, Armin, 86974, Apfeldorf (DE); Unverzagt, Stefan, 86929, Penzing (DE)
(74) Vertreter: Wildi, Roland

(56) Entgegenhaltungen:
- US-A- 4 461 366
- US-A1- 2002 054 788

## Beschreibung

### Technisches Gebiet

Die Erfindung betrifft eine Vorrichtung zum Verbinden von Montageschienen, insbesondere zum Verbinden von C-förmigen Montageschienen, wobei die Vorrichtung ein Basisteil und zumindest ein im Wesentlichen winkelförmiges Anbindeteil umfasst. Das Basisteil weist an zumindest einer Seitenwand eine Öffnung zur Durchführung eines Befestigungsmittels auf, die mit einem Kragen versehen ist. Das Anbindeteil weist eine Öffnung zur Durchführung des Befestigungsmittels auf, wobei der Kragen am Basisteil mit der zumindest einen Öffnung im Anbindeteil in Eingriff bringbar ist.

### Stand der Technik

Beispielsweise Rohrinstallationen werden an Montageschienen befestigt, die z. B. an einer Decke angeordnet sind. Zur Installation von Rohrleitungen werden auch im Raum erstellte Konstruktionen verwendet, die aus einzelnen, zumeist standardisierten Profilen erstellt werden. Solche Konstruktionen sind beispielsweise aus mehreren, miteinander verbundenen C-förmigen Montageschienen zusammengesetzt. Es sind verschiedene Vorrichtungen zum Verbinden von Montageschienen bekannt, die eine Erstellung von zwei- und dreidimensionalen Konstruktionen aus Montageschienen ermöglichen. Jede Art von Verbindung benötigt speziell auf diese Verbindung ausgebildete Verbindungselemente.

In der DE 100 52 577 A1 wird eine Verbindungsvorrichtung zum Verbinden von Montageschienen vorgeschlagen, die ein Basisteil und ein Anbindeteil aufweist. Das Anbindeteil ist durch eine Rastverbindung lösbar mit dem Basisteil verbindbar. Das Anbindeteil weist vier Rastnocken auf, die in vier symmetrisch um die Befestigungsöffnung angeordnete Bohrungen in Eingriff bringbar sind.

Nachteilig an der bekannten Lösung ist, dass die Anbindeteile nur in den, von den Rast- und Gegenrastelementen vorgegebenen Positionen an den Basisteilen befestigt werden können.

Werden die vorgenannten Anbindeteile ohne Rast- und Gegenrastmittel an den Basisteilen befestigt, weist die geschaffene Verbindung eine ungenügende Torsionssteifigkeit auf.

### Darstellung der Erfindung

Aufgabe der Erfindung ist es, eine Vorrichtung zum Verbinden von Montageschienen zu schaffen, die wenige Bestandteile aufweist und einen grossen Freiraum in der Ausgestaltung der zu erstellenden Konstruktionen ermöglicht.

Die Aufgabe ist durch die Merkmale des Anspruchs 1 gelöst. Gemäss der Erfindung umfasst eine Vorrichtung zum Verbinden von Montageschienen, insbesondere zum Verbinden von C-förmigen Montageschienen, ein Basisteil und zumindest ein im Wesentlichen winkelförmiges Anbindeteil. Das Basisteil weist an zumindest einer Seitenwand eine Öffnung zur Durchführung eines Befestigungsmittels auf, die mit einem Kragen versehen ist. Das Anbindeteil weist eine Öffnung zur Durchführung des Befestigungsmittels auf. Der Kragen am Basisteil ist mit der zumindest einen Öffnung im Anbindeteil in Eingriff bringbar. Der Kragen weist zumindest bereichsweise einen als Klemmkonus ausgebildeten Konusabschnitt auf.

Das Basisteil wird entlang einer ersten Montageschiene positioniert und an dieser fixiert. Anschliessend wird das Anbindeteil an dem Basisteil durch Verspannen des Befestigungsmittels befestigt, wobei mittels des Konusabschnitts eine Klemmverbindung zwischen den beiden Teilen der Verbindungsvorrichtung entsteht. Durch den Klemmkonus wird eine spielfreie Zentrierung der Verbindung geschaffen und die Verbindung weist eine hohe Torsionssteifigkeit auf. Das Anbindeteil kann in jeder Winkelposition um die Achse der Öffnung des Basisteils angeordnet werden. Damit können die zu verbindenden Montageschienen beliebig ausgerichtet miteinander verbunden und müssen nicht in einem festen Raster zueinander angeordnet werden.

Vorzugsweise weist der Kragen einen Konusabschnitt, der sich an die zumindest eine Seitenwand des Basisteils anschliesst, und einen rohrstumpfartigen Abschnitt auf, der sich an den Konusabschnitt anschliesst. Der rohrstumpfartigen Abschnitt des Kragens dient als Zentriermittel damit das Anbindeteil geführt an das Basisteil angeschlossen wird. Der Konusabschnitt des Kragens schafft die formschlüssige Verbindung zwischen dem Anbindeteil und dem Basisteil beim Verspannen des Befestigungsmittels.

Bevorzugt weist die zumindest eine Öffnung im Basisteil ein Innengewinde auf und das Befestigungsmittel umfasst Schraubmittel. Das Befestigungsmittel greift in das Innengewinde ein. Bei der Verspannung des Befestigungsmittels wird die Öffnung im Anbindeteil über den Konusabschnitt am Kragen des Basisteils gezogen, was den Formschluss zwischen den beiden Teilen in bevorzugter Art und Weise sicherstellt. Diese Pressverbindung ist zudem für das Ausreissverhalten des Befestigungsmittels vorteilhaft, da der Gewindebereich in der Öffnung am Basisteil durch das Anbindeteil gestützt wird. Die Länge des Schraubmittels ist vorzugsweise derart gewählt, dass im verspannten Zustand des Schraubmittels dieses die Ebene nicht durchdringt, die durch die Innenfläche der entsprechenden Seitenwand gebildet wird. Somit kann das Anbindeteil auch an den Seiten beispielsweise einer C-förmigen Montageschiene angeordnet werden, die keine Ausnehmungen aufweisen.

Vorteilhafterweise beträgt der Neigungswinkel des Konusabschnitts weniger als 15°, vorzugsweise weniger als 8°. In Abhängigkeit der Verformbarkeit der zur Fertigung des Basisteils, beziehungsweise des Anbindeteils gewählten Materials kann die Grösse des Winkels des Konusabschnitts gewählt werden. Für Teile die aus einem Blech, beispielsweise in einem Stanz-/Biegeverfahren, gefertigt wurden, beträgt der Winkel des Konusabschnitts vorzugsweise weniger als 8°. Damit ist gewährleistet, dass das Anbindeteil mit dessen Öffnung über den Kragen am Basisteil geschoben werden kann und die gewünschte Klemm- beziehungsweise Pressverbindung geschaffen wird.

Vorzugsweise ist das Basisteil aus einem höherfestem Werkstoff als das Anbindeteil gefertigt. Der Bereich der Öffnung im Anbindeteil kann sich bei dieser Ausführungsform bei der Verspannung des Befestigungsmittels derart stark verformen, dass eine formschlüssige Verbindung gewährleistet ist, ohne dass ein grosses Anzugsmoment auf das Befestigungsmittel zur Erstellung der Verbindung aufgebracht werden muss.

Bevorzugt weist die Aussenfläche des Konusabschnitts eine Profilierung, optional eine Rändelung auf. Mit der Profilierung wird die Torsionssteifigkeit der Verbindung zwischen dem Basisteil und dem Anbindeteil zusätzlich verbessert.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: eine Explosionsdarstellung der erfindungsgemässen Vorrichtung mit einem Basisteil und einem Anbindeteil;
- Fig. 2: einen Schnitt durch das Basisteil;
- Fig. 3: einen Schnitt durch das Anbindeteil; und
- Fig. 4: ein Detailausschnitt X der Fig. 2.

Grundsätzlich sind in den Figuren gleiche Teile mit den gleichen Bezugszeichen versehen.

### Wege zur Ausführung der Erfindung

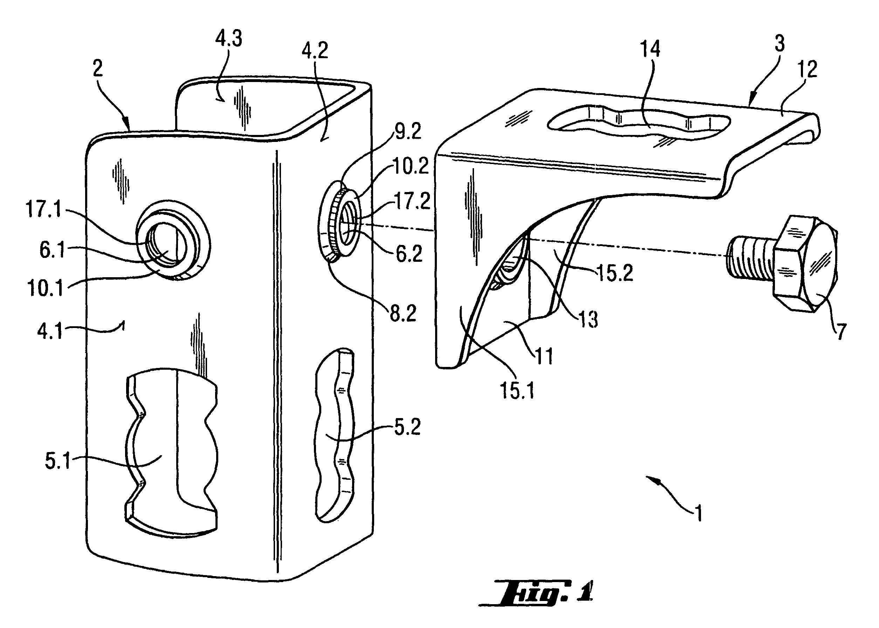

Fig. 1 stellt eine Explosionsdarstellung der erfindungsgemässen Vorrichtung mit einem Basisteil und einem Anbindeteil dar. Die Verbindungsvorrichtung 1 umfasst ein U-förmiges Basisteil 2 und ein winkelförmiges Anbindeteil 3. Das Basisteil 2 ist aus einem höherfesteren Werkstoff als das Anbindeteil 3 gefertigt.

An allen drei Seitenwänden 4.1, 4.2 und 4.3 weist das Basisteil 2 Öffnungen 5.1, 5.2 oder 5.3 zur Durchführung einer Schienenmutter zur Befestigung des Basisteils 2 an einer ersten Montageschiene auf. Vorzugsweise werden sogenannte Schnellspannmuttern verwendet, wie sie bei Rohrinstallationen im Zusammenhang mit Montageschienen Anwendung finden. Des Weiteren ist an jeder Seitenwand 4.1, 4.2 und 4.3 eine Öffnung 6.1, 6.2 und 6.3 mit einem Innengewinde 17.1, 17.2, bzw. 17.3 vorgesehen, in die das Befestigungsmittel, z. B. die Schraube 7, zur Befestigung des Anbindeteils 3 an dem Basisteil 2 eingreifen kann. Die Öffnungen 6.1, 6.2 und 6.3 weisen einen Kragen 10.1, 10.2 und 10.3 auf, der einen Konusabschnitt 8.2 und einen rohrstumpfartigen Abschnitt 9.2 aufweist.

Das winkelförmige Anbindeteil 3 weist einen ersten Schenkel 11 und einen zweiten Schenkel 12 auf. An dem ersten Schenkel 11 ist eine Öffnung 13 zur Durchführung der Schraube 7 vorgesehen. An dem zweiten Schenkel 12 ist eine Öffnung 14 zur Durchführung einer Schienenmutter vorgesehen, damit eine zweite Montageschiene an dem Anbindeteil 3 befestigt werden kann. Zur Erhöhung der Traglast des winkelförmigen Anbindeteils 3 weist dieses in den seitlichen Eckbereichen der beiden Schenkel 11 und 12 Verstärkungsbleche 15.1 und 15.2 auf.

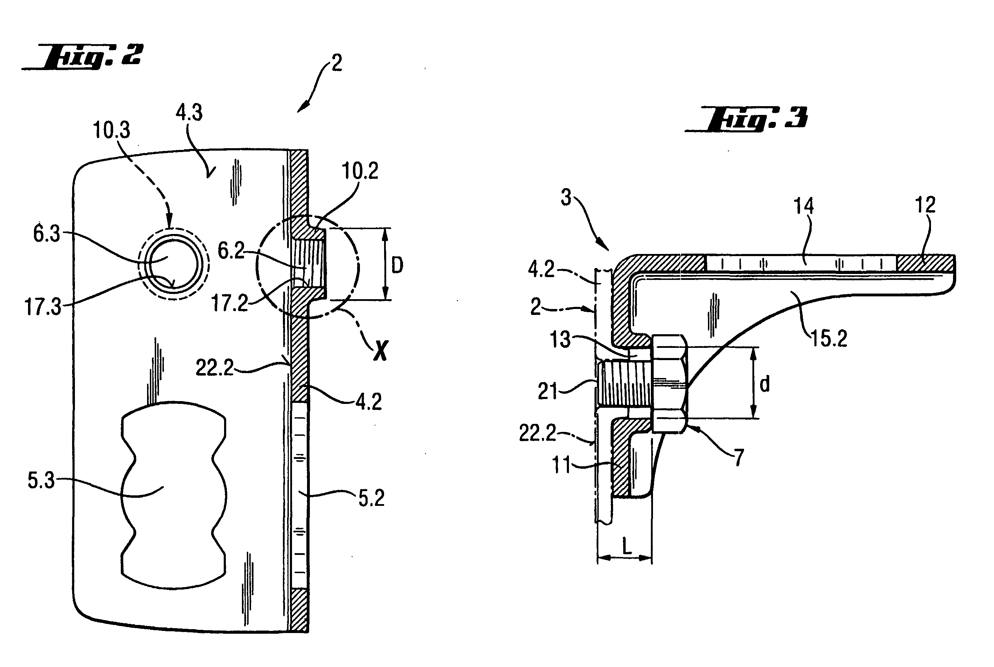

In Fig. 2 ist ein Schnitt durch das Basisteil gezeigt. Der Aussendurchmesser D des rohrstumpfartigen Abschnitts 9.2 der Kragen 10.1, 10.2 und 10.3 ist kleiner als der Innendurchmesser d der Öffnung 13 des Anbindeteils 3 ausgebildet, so dass der Kragen 10.1, 10.2 bzw. 10.3 in die Öffnung 13 eindringen kann. An der Aussenseite der Kragen 10.1, 10.2 und 10.3 kann eine Rändelung 16.2 vorgesehen sein.

Ein Schnitt durch das Anbindeteil ist in Fig. 3 dargestellt. Die Länge L der Schraube 7 ist derart gewählt, dass im zusammengesetzten Zustand des Basisteils 2 mit dem Anbindeteil 3 der vorderste Punkt 21 der Schraube 7 nicht die Ebene durchdringt, die durch die entsprechende Innenseite, z. B. die Innenseite 22.2 der Seitenwand 4.2, gebildet wird, an der das Anbindeteil 3 an dem Basisteil 2 angeschlossen wird. So wird gewährleistet, dass die Verbindungsvorrichtung 1 an jeder Stelle der Montageschiene angeordnet werden kann.

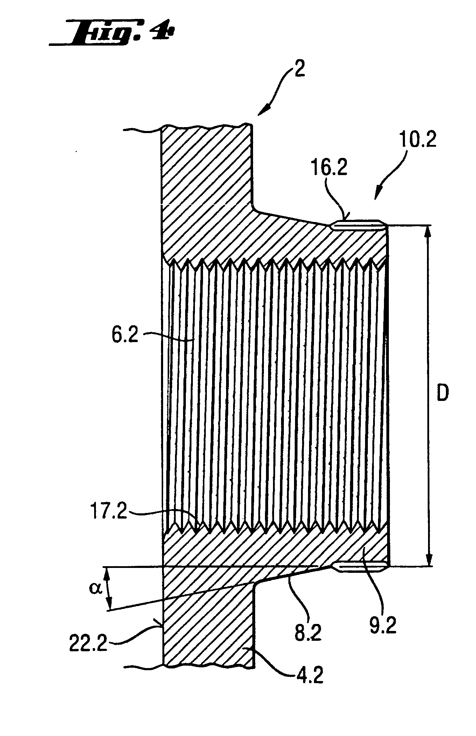

Fig. 4 zeigt einen Detailausschnitt X der Fig. 2. Der Kragen 10.2 der Öffnung 6.2 weist einen Konusabschnitt 8.2, der sich an die Seitenwand 4.2 des Basisteils 2 anschliesst, sowie einen rohrstumpfartigen Abschnitt 9.2 auf, der sich an den Konusabschnitt 8.2 anschliesst. Der Neigungswinkel α des Konusabschnitts 8.2 beträgt 7°, wobei sich der Konusabschnitt 8.2, bezogen auf die Achse der Öffnung 6.2, in Richtung der Seitenwand 4.2 radial nach aussen aufweitet.

Das Basisteil 2 wird entlang der ersten Montageschiene verschoben, bis die gewünschte Position des Basisteils 2 an der Montageschiene erreicht ist. Anschliessend wird, je nach Ausrichtung der Montageschiene, in einer der Öffnungen 5.1, 5.2 oder 5.3 des Basisteils 2 die Schienenmutter eingeführt. Nachdem das Basisteil 2 in der gewünschten Position an der ersten Montageschiene fixiert ist, wird das Anbindeteil 3 an der Seitenwand 4.1, 4.2 bzw. 4.3 des Basisteils 2 angeordnet, an der die zweite Montageschiene anschliessen soll. Die nachfolgenden Ausführungen beziehen sich auf einen Anschluss des Anbindetteils 3 an der Seitenwand 4.2 des Basisteils 2. Mittels dem rohrstumpfartigen Abschnitt 9.2 am Kragen 10.2, der in die Öffnung 13 des Schenkels 11 des Anbindeteils 2 eindringt, wird das Anbindeteil 2 in Richtung des Basisteils 2 geführt. Sobald der, der Seitenwand 4.2 zugewandte, Rand der Öffnung 13 an dem Konusabschnitt 8.2 anliegt, wird die Schraube 7 mit dem Innengewinde der Öffnung 6.2 in der Seitenwand 4.2 in Eingriff gebracht. Das Anbindeteil 3 wird durch Drehen um die Längsachse der Schraube 7 in die Position gebracht, in der die zweite Montageschiene an die erste Montageschiene anschliessen. Beim Verspannen der Schraube 7 wird der erste Schenkel 11 des Anbindeteils 3 an die Seitenwand 4.2 herangezogen, wobei sich der Rand der Öffnung 13 im Anbindeteil 3 über den Konusabschnitt 8.2 schiebt und sich die Öffnung 13 infolge der unterschiedlichen Werkstoffpaarung aufweitet. Bereits bei einem Anzugsmoment an der Schraube 7 von etwa 40 Nm werden das Basisteil 2 und das Anbindeteil 3 miteinander verpresst, so dass die Verbindung zwischen den beiden Teilen form- und kraftschlüssig ist.

Zusammenfassend ist festzustellen, dass eine Vorrichtung zum Verbinden von Montageschienen geschaffen wurde, die wenige Bestandteile aufweist. Das Anbindeteil kann beliebig ausgerichtet an dem Basisteil angeordnet werden, was einen grossen Freiraum in der Ausgestaltung der zu erstellenden Konstruktionen ermöglicht. Die mit der erfindungsgemässen Vorrichtung geschaffene Verbindung zwischen den verbundenen Montageschienen weist eine spielfreie Zentrierung und eine hohe Torsionssteifigkeit auf, womit die Vorrichtung hohen Anforderungen genügen kann.

## Patentansprüche

1. Vorrichtung zum Verbinden von Montageschienen, insbesondere zum Verbinden von C-förmigen Montageschienen, wobei die Vorrichtung (1) ein Basisteil (2) und zumindest ein im Wesentlichen winkelförmiges Anbindeteil (3) umfasst, wobei das Basisteil (2) an zumindest einer Seitenwand (4.1, 4.2 bzw. 4.3) eine Öffnung (6.1, 6.2, 6.3) zur Durchführung eines Befestigungsmittels (7) aufweist, die mit einem Kragen (10.1, 10.2, 10.3) versehen ist, und wobei das Anbindeteil (3) eine Öffnung (13) zur Durchführung des Befestigungsmittels (7) aufweist, und wobei der Kragen (10.1, 10.2, 10.3) am Basisteil (2) mit der zumindest einen Öffnung (13) im Anbindeteil (3) in Eingriff bringbar ist, **dadurch gekennzeichnet, dass** der Kragen (10.1, 10.2, 10.3) zumindest bereichsweise einen als Klemmkonus ausgebildeten Konusabschnitt (8.2) aufweist.

2. Vorrichtung nach Anspruch 1, **dadurch gekennzeichnet, dass** der Kragen (10.1, 10.2, 10.3) einen Konusabschnitt (8.2), der sich an die zumindest eine Seitenwand (4.1, 4.2, 4.2) des Basisteils (2) anschliesst, und einen rohrstumpfartigen Abschnitt (9.2) aufweist, der sich an den Konusabschnitt (8.2) anschliesst.

3. Vorrichtung nach Anspruch 1 oder 2, **dadurch gekennzeichnet, dass** die zumindest eine Öffnung (6.1, 6.2, 6.3) im Basisteil (2) ein Innengewinde (17.1, 17.2, 17.3) aufweist, und dass das Befestigungsmittel Schraubmittel (7) umfasst.

4. Vorrichtung nach einem der Ansprüche 1 bis 3, **dadurch gekennzeichnet, dass** der Neigungswinkel (α) des Konusabschnitts (9.2) weniger als 15°, vorzugsweise weniger als 8° beträgt.

5. Vorrichtung nach einem der Ansprüche 1 bis 4, **dadurch gekennzeichnet, dass** das Basisteil (2) aus einem höherfestem Werkstoff als das Anbindeteil (3) gefertigt ist.

6. Vorrichtung nach einem der Ansprüche 1 bis 5, **dadurch gekennzeichnet, dass** die Aussenfläche des Konusabschnitts (9.2) eine Profilierung, optional eine Rändelung (16.2) aufweist.

## Claims

1. Device for connecting mounting rails, in particular for connecting C-shaped mounting rails, wherein the device (1) includes a base part (2) and at least one substantially angular connecting part (3), the base part (2) is provided on at least one side wall (4.1, 4.2 or 4.3) with an opening (6.1, 6.2, 6.3) intended for the passage of a fastening means (7) and provided with a collar (10.1, 10.2, 10.3), the connecting part (3) has an opening (13) intended for the passage of the fastening means (7) and the collar (10.1, 10.2, 10.3) on the base part (2) can be brought into engagement with the at least one opening (13) in the connecting part (3), **characterised in that** the collar (10.1, 10.2, 10.3) is provided at least in some areas with a conical portion (8.2) designed as a clamping cone.

2. Device according to claim 1, **characterised in that** the collar (10.1, 10.2, 10.3) has a conical portion (8.2) connected to the at least one side wall (4.1, 4.2, 4.3) of the base part (2) and a truncated portion (9.2) connected to the conical portion (8.2).

3. Device according to claim 1 or claim 2, **characterised in that** the at least one opening (6.1, 6.2, 6.3) in the base part (2) has an internal thread (17.1, 17.2, 17.3) and that the fastening means includes threaded means (7).

4. Device according to one of claims 1 to 3, **characterised in that** the angle of inclination (α) of the conical portion (8.2) is less than 15°, preferably less than 8°.

5. Device according to one of claims 1 to 4, **characterised in that** the base part (2) is made of a higher-strength material than the connecting part (3).

6. Device according to one of claims 1 to 5, **characterised in that** the outer surface of the conical portion (8.2) is provided with profiling, optionally knurling (16.2).

## Revendications

1. Dispositif pour relier des rails de montage, en particulier pour relier des rails de montage en forme de C, le dispositif (1) comprenant une partie de base (2) et au moins une partie de liaison sensiblement en forme d'équerre (3), la partie de base (2) étant pourvue sur au moins une paroi latérale (4.1, 4.2, respectivement 4.3) d'une ouverture (6.1, 6.2, 6.3) destinée au passage d'un moyen de fixation (7) et munie d'un collet (10.1, 10.2, 10.3), la partie de liaison (3) étant pourvue d'une ouverture (13) pour le passage du moyen de fixation (7), et le collet (10.1, 10.2, 10.3) sur la partie de base (2) pouvant être amené en prise avec l'ouverture (13), au nombre d'au moins une, dans la partie de liaison (3), **caractérisé en ce que** le collet (10.1, 10.2, 10.3) comporte, au moins par endroits, une portion conique (8.2) conformée en cône de serrage.

2. Dispositif selon la revendication 1, **caractérisé en ce que** le collet (10.1, 10.2, 10.3) comporte une portion conique (8.2), qui se raccorde à la paroi latérale (4.1, 4.2, 4.3), au nombre d'au moins une, de la partie de base (2), et une portion en forme de tube tronqué (9.2) qui se raccorde à la portion conique (8.2).

3. Dispositif selon la revendication 1 ou 2, **caractérisé en ce que** l'ouverture (6.1, 6.2, 6.3), au nombre d'au moins une, dans la partie de base (2) comporte un taraudage (17.1, 17.2, 17.3), et **en ce que** le moyen de fixation comprend des moyens de vissage (7).

4. Dispositif selon une des revendications 1 à 3,
**caractérisé en ce que** l'angle d'inclinaison (α) de la portion conique (9.2) est inférieur à 15°, de préférence inférieur à 8°.

5. Dispositif selon une des revendications 1 à 4,
**caractérisé en ce que** la partie de base (2) est réalisée dans un matériau supérieur en résistance mécanique à celui de la partie de liaison (3).

6. Dispositif selon une des revendications 1 à 5,
**caractérisé en ce que** la face extérieure de la portion conique (9.2) présente un profilage, optionnellement un moletage (16.2).
